# EUROPÄISCHE PATENTSCHRIFT

(11) **EP 2 918 000 B1**
(45) Veröffentlichungstag und Bekanntmachung des Hinweises auf die Patenterteilung: **02.08.2017**
(21) Anmeldenummer: 13786240.5
(22) Anmeldetag: 05.11.2013
(51) Int. Cl.: H02K 1/32, H02K 5/20, H02K 9/08, H02K 9/19, H02K 17/16

(54) **ELEKTRISCHE MASCHINE MIT INNERER LUFTKÜHLUNG**
ELECTRIC MACHINE HAVING INTERNAL AIR COOLING
MACHINE ÉLECTRIQUE À REFROIDISSEMENT À AIR INTÉRIEUR

(30) Priorität: 07.11.2012 DE 102012220239
(43) Veröffentlichungstag der Anmeldung: 16.09.2015
(73) Patentinhaber: Continental Automotive GmbH, 30165 Hannover (DE)
(72) Erfinder: FRÖHLICH, Holger, 13127 Berlin (DE)
(86) Internationale Anmeldenummer: PCT/EP2013/072975
(87) Internationale Veröffentlichungsnummer: WO 2014/072263

(56) Entgegenhaltungen:
- WO-A1-2008/031804
- DE-B- 1 099 064
- US-A- 5 859 483
- US-A1- 2007 018 516

## Beschreibung

Es wird eine elektrische Maschine beschrieben. Die elektrische Maschine weist einen Rotor mit einer vorderen Stirnseite und einer hinteren Stirnseite auf. Luftkühlungskanäle erstrecken sich innerhalb des Rotors in axialer Richtung von der vorderen zu der hinteren Rotorstirnseite. Der Druckschrift US 2007/0018516 A1 sind die Merkmale des Oberbegriffs von Anspruch 1 zu entnehmen. Aus der Druckschrift EP 2 109 207 A2 ist eine flüssigkeitsgekühlte elektrische Maschine mit einer inneren Luftumwälzung bekannt. Für die innere Luftumwälzung weist die bekannte elektrische Maschine einen Rotor auf, der in axialer Richtung Luftkühlungskanäle auf einem Teilkreis koaxial zur Rotorachse aufweist, wobei die Luftkühlungskanäle Bohrungen mit glatten Innenwänden aufweisen, durch die bei Rotation des Rotors sich kühlende im Wesentlichen laminare Luftströmungen ausbilden. Um eine Zirkulation zu erreichen, weisen die Luftkühlungskanäle auf dem einen Teilkreis koaxial zur Rotorachse abwechselnd ein offenes Ende zu jeweils einem Wickelkopf eines Stators und ein mit einem Radialgebläse zusammenwirkendes benachbartes Ende auf einer der Stirnseiten des Rotors auf. Dadurch kann die Luft beispielsweise durch ein offenes Ende der vorderen Stirnseite angesogen und aus einem hinteren Ende einer hinteren Stirnseite über Radialgebläseschaufeln ausgeblasen werden. Mit einem benachbarten offenen Ende eines Luftkühlungskanals auf der hinteren Stirnseite kann die Luft eines hinteren Wickelkopfes zu einem Radialgebläse auf der vorderen Stirnseite des Rotors geführt werden.

Dazu sind relativ komplexe Luftleitbleche an den Stirnseiten des Rotors erforderlich, um sicherzustellen, dass nur jeder zweite Luftleitungskanal auf einer Stirnseite mit Gebläseschaufeln verbunden ist und auf der gegenüberliegenden Stirnseite ein offenes Ende aufweist, das erwärmte Luft von einem Wickelkopf der Statorwicklung abziehen kann. Darüber hinaus hat eine laminare Luftströmung, die sich in den langgestreckten axialen Luftkühlungskanälen ausbreitet, den Nachteil, dass sich zu den Wänden der Luftkühlungskanäle Grenzschichten ausbilden, die eine Wärmeübertragung aufgrund eines erhöhten Wärmeleitwiderstandes behindern.

Aufgabe der Erfindung ist es deshalb, die zirkulierende innere Luftkühlung raumsparend zu vereinfachen und die Kühlwirkung zu intensivieren.

Diese Aufgabe wird mit dem Gegenstand des unabhängigen Anspruchs gelöst. Vorteilhafte Weiterbildungen ergeben sich aus den abhängigen Ansprüchen. Erfindungsgemäss wird zunächst eine elektrische Maschine mit innerer Luftkühlung geschaffen, die einen Rotor mit einer vorderen Rotorstirnseite und einer hinteren Rotorstirnseite aufweist. Ein erster Luftkühlungskanal erstreckt sich innerhalb des Rotors in axialer Richtung der Rotorachse von der vorderen zu der hinteren Rotorstirnseite. In den Luftkühlungskanal ragt ein Verwirbelungssteg als radialer Vorsprung hinein. Dabei erstreckt sich der Verwirbelungssteg in axialer Richtung des Rotors.

Mit dieser Ausführungsform der Erfindung ist der Vorteil verbunden, dass eine wirkungsvollere Luftkühlung als bei herkömmlichen Elektromotoren mit innerer Luftkühlung durch Kühlluftkanäle mit glatten Wänden der Durchgangsbohrungen durch den Rotor, wie sie aus der obigen Druckschrift bekannt sind, erreicht wird. Durch die wirkungsvollere Luftkühlung wird eine Leistungssteigerung gegenüber baugleichen elektrischen Maschinen gleicher Größe erreicht. Durch die erfindungsgemäßen Verwirbelungsstege wird die Effizienz der Wärmeübertragung durch Verwirbelung von der Wärmeübertragung behindernden Strömungsgrenzschichten gesteigert. Da bei laminarer wirbelungsfreier Strömung der Gesamtwiderstand des Wärmedurchgangs hauptsächlich in diesen Strömungsgrenzschichten zwischen Kühlluftkanalwand und strömender Kühlluft liegt, kann die Wärmeleitung mithilfe der erfindungsgemäßen Verwirbelungsstege erheblich verbessert werden und die Leistungsaufnahmefähigkeit gegenüber baugleichen elektrischen Maschinen um mehrere 10 % verbessert werden.

Mit derartigen Verwirbelungsstegen können die bewegten Teilchen bei turbulenter Strömung höher mit Wärmeenergie beladen werden und führen die Wärme in weit größerem Maße ab. Durch die Verwirbelungsstege wird an diesen Stellen der Querschnitt des Kühlluftkanals verengt, was zu einem schnelleren Fließen und damit zu einem intensiveren Mischen der Strömungsschichten des Luftstromes führt, womit wiederum die Abnahme der Dicke der den Wärmewiderstand bestimmenden Prandtl-Grenzschicht erreicht wird.

In Bezug auf die Wärmekonvektion lässt sich damit ein verbesserter Wärmeübergang nicht nur durch eine Erhöhung der Strömungsgeschwindigkeit sondern auch durch wiederholtes Unterbrechen des Strömungsweges durch die Verwirbelungsstege und damit durch Erzeugen turbulenter Strömungen eine Erhöhung des Turbulenzgrades erreichen, um damit die Mischung zu verbessern bzw. gezielte Wirbelstrukturen in dem Luftkühlungskanal zu erzeugen. Während bei den aus dem Stand der Technik bekannten Luftkühlungskanälen in einem Rotor mit glatten Kühlluftkanalwänden ein sehr geringer Wärmeübergang auftritt, wird durch das Anordnen der Verwirbelungsstege, die in den Luftkühlungsstrom hineinragen, eine deutliche Erhöhung des Wärmeübergangs erreicht.

Dabei ist die Höhe der Verwirbelungsstege geringer als der Kanaldurchmesser. Derartige Verwirbelungsstege können auf der inneren Oberfläche eines Luftkühlungskanals im Rotor äquidistant auf dem Umfang des Luftkühlungskanals verteilt angeordnet sein.

Durch die abrupte Querschnittsänderung mittels der Verwirbelungsstege werden die Strömungsgrenzschichten an der inneren Oberfläche der Luftführungskanäle unterbrochen, wodurch sich hier der Wärmeübergang erhöht. Gleichzeitig werden Sekundärströmungen erzeugt, welche sowohl den Wärmeübergang in Randnähe steigern als auch die Durchmischung der wandnahen Bereiche der Kühlluftströmung mit der mittleren Hauptströmung in dem Kühlungskanal fördern, da die Kühlluft verbessert an die innere Oberfläche geführt wird.

Da die Verwirbelungsstege in Strömungsrichtung axial ausgerichtet sind, werden die Verwirbelungseffekte unter Auslösen von Sekundärströmungen und Turbulenzen durch die Verwirbelungsstege erst wirksam, wenn erstens durch Rotation des Rotors eine Kühlluftströmung mithilfe von stirnseitig angeordneten Radialgebläseschaufeln angeregt wird und zusätzlich durch die Drehung des Rotors und die Luftströmung eine Coriolis-Beschleunigung auf die Luftmoleküle ausgeübt wird. Die erfindungsgemässe elektrische Maschine weist weiterhin einen zweiten Luftkühlungskanal auf, der sich innerhalb des Rotors in axialer Richtung der Rotorachse von der vorderen zu der hinteren Rotorstirnseite erstreckt, wobei der erste Luftkühlungskanal auf einem radial inneren Teilkreis und der zweite Luftkühlungskanal auf einem radial äußeren Teilkreis parallel zu der Rotorachse angeordnet sind, und wobei eine Luftleitscheibe sich über stirnseitig offene Enden des zweiten Luftkühlungskanals erstreckt, während die stirnseitig offenen Enden des ersten Luftkühlungskanals zu Wickelköpfen einer Statorwicklung hin offen bleiben, und wobei innerhalb des Rotors eine radial ausgerichtete Kanalpassage vorgesehen ist, welche den ersten Luftkühlungskanal mit dem zweiten Luftführungskanal verbindet.

Unter Teilkreisen bzw. Teilkreisanordnungen auf oder in rotationssymmetrischen Körpern werden in diesem Zusammenhang Orte gleichen Radius rₓ auf einer Scheibe (weichmagnetische Blechscheibe eines Rotors oder Stirnseite eines Rotors) zwischen dem radial inneren Rand mit dem inneren Radius rᵢ der Scheibe und dem radial äußeren Rand mit einem Radius rₐ der Scheibe mit rᵢ < rₓ <rₐ verstanden.

Bei der Erfindung ist es von Vorteil, dass eine gegenüber dem Stand der Technik vergrößerte Anzahl von Luftkühlungskanälen dadurch vorgesehen wird, dass zwei Teilkreise von Kühlungskanälen in dem Rotor angeordnet sind, so dass ein gesamter innerer Teilkreis von Luftführungskanälen Luft aus den Wicklungsköpfen der Statorwicklungen absaugt, wobei diese Luft von einer Gehäuseflüssigkeitskühlung stammt und durch die Sogwirkung die Wickelköpfe der Statorwicklung bereits kühlt und zusätzlich den Rotor über die Kühlluftkanäle durchströmen kann, so dass auch der Rotor durch diese innere Luftzirkulation über die Luftführungskanäle des radial inneren Teilkreises und des radial äußeren Teilkreises gekühlt werden kann. Die stirnseitigen Luftleitbleche, die sich bis zu den offenen Enden der Luftkühlungskanäle des äußeren Teilkreises erstrecken, sorgen dafür, dass die axialen Luftströme durch die Luftführungskanäle in radial und zentrifugal beschleunigte Luftströme umgelenkt werden.

Um diesen Effekt zu unterstützen, weisen die Stirnseiten des Rotors zwischen den Luftleitscheiben Radialgebläseschaufeln auf, die an den stirnseitig offenen Enden der Kühlluftkanäle einen Unterdruck bei Rotationen des Rotors erzeugen. Dazu können die Radialgebläseschaufeln als rückwärtsgeneigte oder rückwärtsgekrümmte oder als radial endende Radialgebläseschaufeln ausgebildet sein.

Die auf beiden Rotorstirnseiten angeordneten Luftleitscheiben decken die Radialgebläseschaufeln ab und wirken mit den stirnseitig offenen Enden der Luftkühlungskanäle des radial äußeren Teilkreises zusammen, wobei die Luftleitscheiben einen Absaugdeckel für stirnseitig offene Enden der Luftkühlungskanäle des äußeren Teilkreises bilden. Die radialen Absaugdeckel der Luftleitscheiben trennen gleichzeitig die Luftströmungen, die einerseits in die offenen Enden des radial inneren Teilkreises einströmen, und die Luftströmungen, die aus den stirnseitig offenen Enden des äußeren Teilkreises der Luftströmungskanäle austreten.

Um eine Zirkulation zwischen axial inneren Luftströmungskanälen des inneren Teilkreises und äußeren Luftströmungskanälen des äußeren Teilkreises zu gewährleisten, sind die Luftkühlungskanäle der beiden Teilkreise in der Achsmitte des Rotors über radiale Kanalpassagen untereinander strömungstechnisch verbunden. Diese Kanalpassagen werden praktisch durch Langlöcher zwischen dem radialen inneren Teilkreis und radial äußeren Teilkreis im Bereich der Achsmitte des Rotors gebildet.

In einer weiteren Ausführungsform der Erfindung ist es vorgesehen, dass der Rotor Blechpakete aus stoffschlüssig miteinander verbundenen weichmagnetischen Blechen aufweist, wobei die Bleche profilierte Stanzlöcher mit Vorsprüngen für die Verwirbelungsstege in den Luftkühlungskanälen der Blechpakete aufweisen können. Für einen kompletten Rotor werden in einer weiteren Ausführungsform der Erfindung drei Blechpakete vorgesehen, nämlich ein vorderes Blechpaket zur vorderen Rotorstirnseite hin, ein hinteres Blechpaket zur hinteren Rotorstirnseite hin und ein mittleres Blechpaket zwischen dem vorderen und dem hinteren Blechpaket. Das vordere und das hintere Blechpaket sind identisch aus kongruenten weichmagnetischen Blechscheiben aufgebaut und weisen jeweils zwei radiale Teilkreise mit Stanzlöchern für Luftkühlungskanäle auf. Das mittlere Blechpaket weist radial ausgerichtete Langlöcher für die radialen Kanalpassagen zwischen den zwei auf radialen Teilkreisen angeordneten Luftkühlungskanälen auf.

Dadurch wird in vorteilhafter Weise erreicht, dass der radial innere Teilkreis mit seinen offenen Enden auf beiden Stirnseiten Kühlluft durch die Wickelköpfe der Statorwicklungen strömen lassen kann, indem sich ein Unterdruck in den offenen Enden der auf dem radial inneren Teilkreis angeordneten Luftführungskanäle ausbildet, wobei diese angesaugte Kühlluft über die Kanalpassagen im Inneren des Rotors zu den radial äußeren Luftkühlungskanälen und über deren offene Enden an den Stirnseiten und die sich anschließenden Radialgebläseschaufeln aus dem rotierenden Rotor ausströmen. Dieser aus den Radialgebläseschaufeln austretende Luftstrom wird von der Innenwandung des flüssigkeitsgekühlten Motorgehäuses nach Durchströmung der Wicklungsköpfe der Statorwicklung gekühlt und von den offenen Enden der Luftkühlungskanäle des axialen inneren Teilkreises wieder angesaugt. Eine intensive Zirkulation des Luftstroms für die innere Luftkühlung wird somit gleichzeitig auf beiden Stirnseiten des Rotors durch die Rotation des Rotors raumsparend aufrechterhalten.

In einer weiteren Ausführungsform ist es vorgesehen, dass der Rotor in dem mittleren Blechpaket eine Trennwand aufweist, welche die Kanalpassagen in eine vordere und eine hintere Kanalpassage zwischen den Luftkühlungskanälen der beiden Teilkreise trennt. Dadurch ergeben sich zwei getrennte Luftzirkulationskreise, ein erster für die vordere Hälfte des Rotors mit dem vorderen Wickelkopf der Statorwicklungen und ein zweiter Zirkulationskreis für die hintere Hälfte des Rotors in Zusammenwirken mit dem hinteren Wickelkopf der Statorwicklungen.

Die Erfindung wird nun anhand der beigefügten Figuren näher erläutert.
- Figur 1: zeigt einen schematischen Querschnitt durch eine elektrische Maschine gemäß einem Aspekt der Erfindung;
- Figur 2: zeigt mit den Figuren 2A, 2B und 2C Varianten von Radialgebläseschaufeln, die auf Stirnseiten eines Rotors der elektrischen Maschine angeordnet sind;
- Figur 3: zeigt einen schematischen Querschnitt durch einen Rotor einer Ausführungsform der Erfindung;
- Figur 4: zeigt einen schematischen Querschnitt durch einen Rotor gemäß einer Modifikation der Ausführungsform gemäß Figur 3;
- Figur 5: zeigt mit den Figuren 5A, 5B und 5C schematische Querschnitte unterschiedlicher Blechpakete des Rotors;
- Figur 6: zeigt eine schematische perspektivische Ansicht eines Rotors mit radial endenden Radialgebläseschaufeln auf den Stirnseiten;
- Figur 7: zeigt mit den Figuren 7A, 7B und 7C perspektivische Ansichten von Komponenten für den Zusammenbau eines Rotors für eine innere Luftzirkulation zur Kühlung der elektrischen Maschine gemäß Figur 1;
- Figur 8: zeigt schematische Ansichten von Ausführungsformen von Verwirbelungsstegen in den Luftkühlungskanälen gemäß eines weiteren Aspektes der Erfindung.

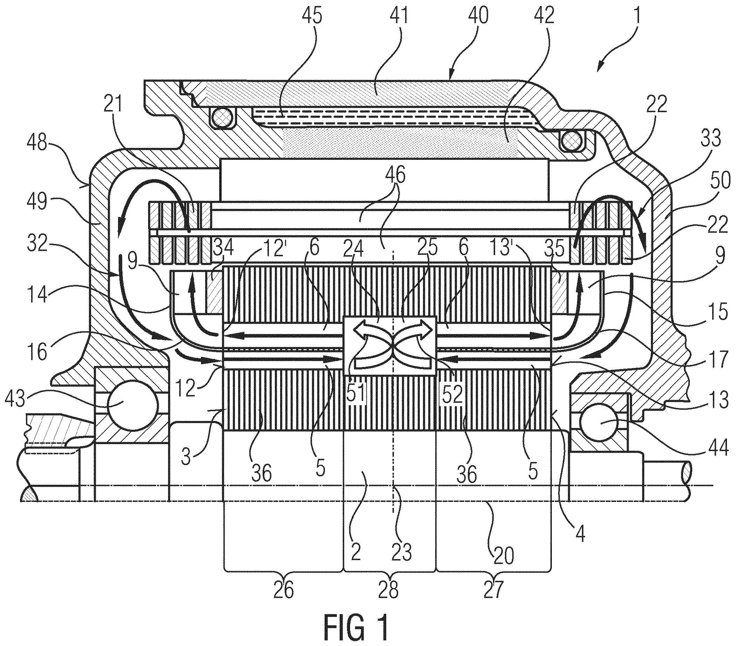

Figur 1 zeigt einen schematischen Querschnitt durch eine elektrische Maschine 1 mit innerer Luftkühlung durch von einem Rotor 2 angeregte und angetriebene Luftzirkulationsströmungen 32 und 33. Die hier gezeigte elektrische Maschine 1 weist einen radialsymmetrischen Innenaufbau auf und lagert in ihrem Zentrum den Rotor 2 mit einer Achse 20. Dieser Rotor 2 ist in einem zweiteiligen Gehäuse 40, das ein äußeres Gehäuseteil 41 und ein inneres Gehäuseteil 42 aufweist, mithilfe eines vorderen Lagers 43 und eines hinteren Lagers 44 drehbar gegenüber dem Gehäuse 40 gelagert. Das Gehäuse 40 ist flüssigkeitsgekühlt, wobei ein Kühlflüssigkeitskanal 45 zwischen dem äußeren Gehäuseteil 41 und dem inneren Gehäuseteil 42 mediendicht angeordnet ist.

Das innere Gehäuseteil 42 trägt die Statorwicklungen 46 und 47 und weist an einer vorderen Front 48 ein vorderes Lagerschild 49 mit dem vorderen Rotorlager 43 auf. Entsprechend weist das äußere Gehäuseteil 41 ein hinteres Lagerschild 50 auf, der das hintere Rotorlager 44 stützt. Durch den Kühlflüssigkeitskanal 45 wird zwar das innere Gehäuseteil 42 mit dem Statorpaket der Statorwicklungen 46 und 47 intensiv gekühlt. Sowohl der vordere Stator-Wickelkopf 21 als auch der hintere Stator-Wickelkopf 22 stehen jedoch weder in unmittelbarem Kontakt noch in mittelbarem Kontakt über die weichmagnetischen Bleckpakete des Stators mit dem Kühlflüssigkeitskanal 45 des Gehäuses 40 thermisch in Verbindung, so dass die Wickelköpfe 21 und 22 thermisch stark belastet sind.

Um dennoch einen ständigen inneren Kühlluftstrom durch die Wickelköpfe 21 und 22 zu führen, sind in dieser Ausführungsform der Erfindung in die sonst üblichen voluminösen Kurzschlussringe 34 und 35 auf der vorderen und der hinteren Stirnseite 3 bzw. 4 des Rotors 2 Radialgebläseschaufeln 9 eingearbeitet. Für die Erzeugung eines vorderen Zirkulationsstromes 32 und eines hinteren Zirkulationsstromes 33 ist somit kein zusätzlicher Raumbedarf in dem Gehäuse 40 erforderlich, und dennoch wird durch zwei intensive Zirkulationsströme in Form des vorderen Zirkulationsstromes 32 und des hinteren Zirkulationsstromes 33 eine verbesserte innere Luftkühlung des vorderen Wickelkopfes 21 und des hinteren Wickelkopfes 22 der Statorwicklungen 46 und 47 erreicht.

Um diese beiden Zirkulationsströme 32 und 33 aufrecht zu erhalten, weist der Rotor zwei übereinander angeordnete Kühlkanalsysteme mit den Luftkühlungskanälen 5 und 6 auf, wobei offene Enden 12 bzw. 13 der radial inneren Kühlluftkanäle 5 Luft aus dem Bereich der Wickelköpfe 21 und 22 ansaugen können. Dazu sind Luftleitscheiben 14 bzw. 15 auf der vorderen Stirnseite 3 und der hinteren Stirnseite 4 des Rotors 2 derart ausgebildet, dass sie zu den offenen Enden 12' bzw. 13' der radial äußeren Luftkühlungskanäle 6 Absaugdeckel 16 und 17 aufweisen und zusätzlich die Radialgebläseschaufeln 9 auf beiden Stirnseiten 3 und 4 radial abdecken, so dass die Radialgebläseschaufeln 9 wirkungsvoll die Luft-Zirkulationsströme 32 und 33 auf der vorderen bzw. hinteren Stirnseite 3 und 4 der elektrischen Maschine 1 aufrechterhalten können.

Um Luft von den auf einem radial inneren Teilkreis angeordneten Luftkühlungskanälen 5 und den auf einem äußeren Teilkreis angeordneten Luftkühlungskanälen 6 zirkulieren zu lassen, sind im Bereich einer Achsmitte 23 des Rotors 2 Kanalpassagen 24 und 25 vorgesehen, welche eine Luftströmungsverbindung in den Pfeilrichtungen 51 und 52 zwischen den beiden Luftkühlungskanälen 5 und 6 bereitstellen. Diese Luftzirkulationslösung ist gegenüber herkömmlichen Lösungen dadurch verbessert, dass zwischen einem inneren Teilkreis für die Luftkühlungskanäle 5 und einem äußeren Teilkreis für die Luftführungskanäle 6 unterschieden wird und nicht zwischen abwechselnd Luft ein- und ausleitenden Kanälen alternative Abdeckungen vorgenommen werden müssen, sondern hier vielmehr durch einfache raumsparende Luftleitscheiben 14 und 15 die offenen Enden 12' und 13' der radial äußeren Luftkühlungskanäle 6 mit den Radialgebläseschaufeln 9 strömungstechnisch in Verbindung stehen, während die offenen Enden 12 und 13 der radial inneren Luftkühlungskanäle 5 ohne jede Abdeckung offen zu den Wickelköpfen 21 und 22 ausgerichtet bleiben.

Da ein derartiger Rotor aus weichmagnetischen Blechpaketen zusammengesetzt ist, werden für diese Ausführungsform der Erfindung lediglich zwei unterschiedliche vorgestanzte weichmagnetische Blechscheiben 36 zur Ausbildung des Rotors 2 benötigt. Für ein vorderes Blechpaket 27 und ein hinteres Blechpaket 28 werden die Luftkühlungskanäle 5 und 6 in die weichmagnetische Blechscheiben 36 eingestanzt. Lediglich im Bereich der Achsmitte 23 des Rotors 2 ist ein Blechpaket 28 mit einem anderen Stanzmuster erforderlich, bei dem über radial ausgerichtete Langlöcher die beiden Luftkühlungskanäle 5 und 6 strömungstechnisch über die Kanalpassagen 24 und 25 miteinander verbunden sind.

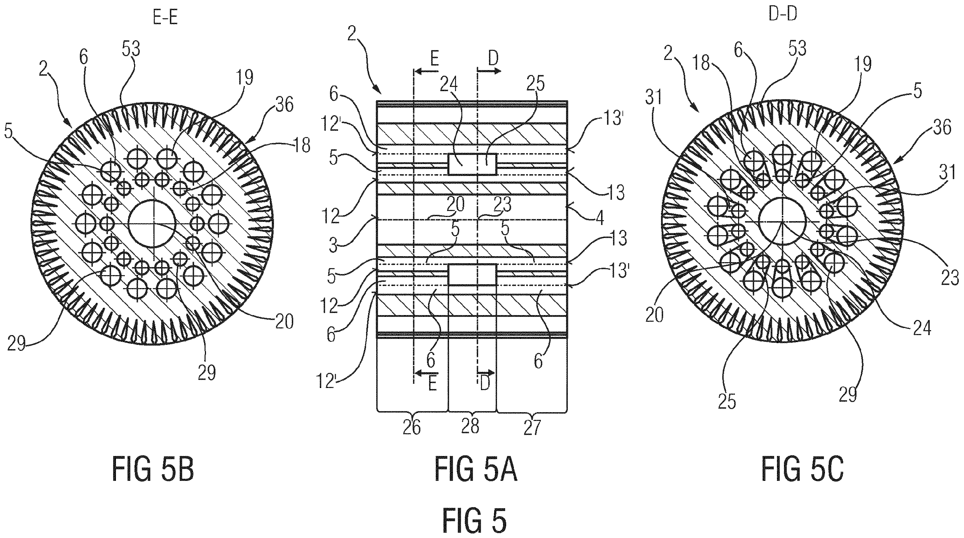

An den ursprünglich ohne Luftzirkulation vorgesehen Kurzschlussringen 34 und 35 auf den Stirnseiten 3 und 4 des Rotors 2 bleibt immer noch genügend Material auch nach Ausbildung der Radialgebläseschaufeln 9 übrig, so dass der Rotor 2 in Form eines Käfigläufers voll funktionsfähig bleibt, wobei die beiden Kurzschlussringe 34 und 35 über zwei getrennte, nicht gezeigte Schleifscheiben mit Strom versorgt werden können. Die Leiterbahnen des Käfigläufers sind in dieser Darstellung der Figur 1 nicht zu sehen. Ihre Anordnung wird jedoch in nachfolgenden Querschnitten mit der Figur 5 gezeigt.

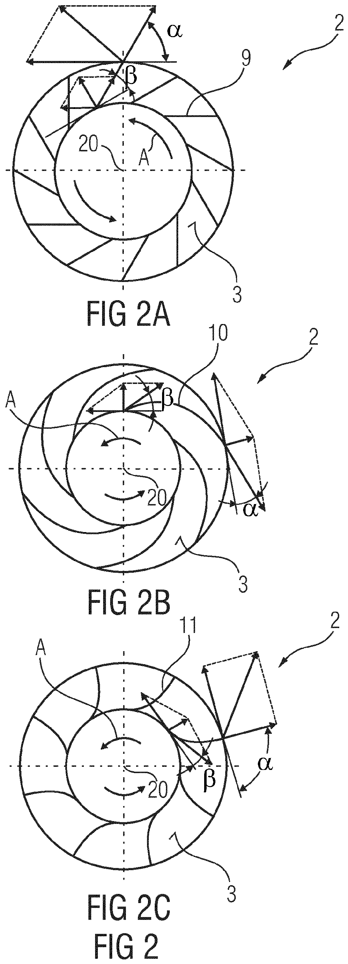

Figur 2 zeigt mit den Figuren 2A, 2B und 2C Varianten von Radialgebläseschaufeln 9, 10 und 11, die auf einer vorderen Stirnseite 3 oder einer hinteren Stirnseite des Rotors 2 der in Figur 1 gezeigten elektrischen Maschine 1 angeordnet werden können. Die maschinentechnisch einfachste aus beispielsweise einem Kurzschlussring spanabhebend herstellbare Radialgebläseform wird in Figur 2A gezeigt, bei dem die Radialgebläseschaufeln 9 rückwärts geneigt, jedoch im Profil gradlinig ausgebildet sind, so dass ein Eintrittswinkel β der Luftströmung in die Radialgebläseschaufeln geringer ist als ein Austrittswinkel α aus den rückwärts geneigten Radialgebläseschaufeln 9. Dazu wird die Drehrichtung des Rotors um seine Rotorachse 20 mit der Pfeilrichtung A markiert.

Gegenüber dieser Variante zeigt die Figur 2B gekrümmte Radialgebläseschaufeln 10, wobei diese Radialgebläseschaufeln 10 rückwärts gekrümmt sind und damit wird der Eintrittswinkel β größer als der Austrittswinkel α. Mit Figur 2C wird eine dritte Variante der Radialgebläseschaufeln 11 gezeigt, die in diesem Fall radial endend ausgeführt sind, so dass der Austrittswinkel α immer 90° zur Tangente des Rotors beträgt und der Eintrittswinkel β deutlich kleiner als 90° ist. Diese Variante erzeugt am Austritt jedoch einen Drall, so dass der volle Ausgangsdruck nur unter Einsatz eines Leitschaufelapparates erreicht werden kann.

Die Auswahl der geeigneten Laufradgeometrie mit Radialgebläseschaufeln 9, 10 oder 11 ist eine Voraussetzung für einen hohen Wirkungsgrad, eine geringe Geräuschentwicklung und eine lange Lebensdauer. Die Radialgebläseschaufeln können, wie die Figur 2 mit den Figuren 2A, 2B und 2C zeigt, rückwärts geneigt und gerade oder rückwärts gekrümmt oder radial endend ausgeführt sein. Rückwärts gekrümmte Radialradschaufeln erreichen einen nicht ganz so hohen auf den Bauraum bezogenen Energieumsetzungsgrad wie vorwärts gekrümmte Schaufeln. Ihr Vorteil ist jedoch, dass der Druck sich bei dieser rückwärts gekrümmten Anordnung bereits weitgehend im Radiallaufrad selbst aufbaut. Deshalb kann auf ein Spiralgehäuse mit Leitschaufelapparat weitestgehend verzichtet werden und das Radiallaufrad aus den bereits vorhandenen Kurzschlussringen durch spanabhebende Bearbeitung geformt werden, ohne dass zusätzlicher Bauraum benötigt wird. Für die in Figur 1 gezeigte Luftzirkulation wird ein freier Luftstrom benötigt, so dass hier das Prinzip der rückwärts gekrümmten Schaufeln ohne zusätzlichen kostenintensiven und komplexen Leitapparat von Vorteil ist.

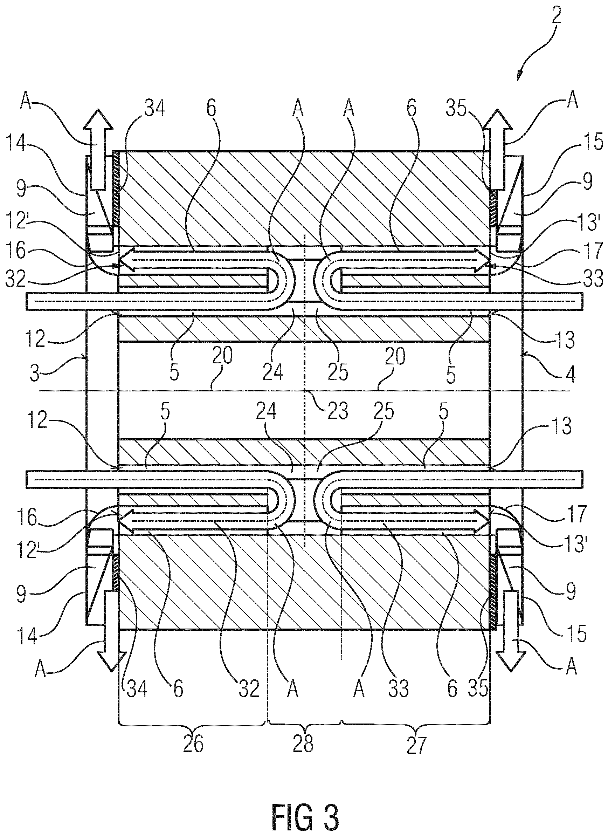

Figur 3 zeigt einen schematischen Querschnitt durch einen Rotor 2 einer Ausführungsform der Erfindung. Komponenten in den nachfolgenden Figuren, die gleiche Funktionen wie in den Figuren 1 und 2 aufweisen, werden mit gleichen Bezugszeichen gekennzeichnet und nicht extra erörtert. In Figur 3 ist die Rotorachse 20 zu sehen und die Achsmitte 23 markiert, in deren Bereich sich die Kanalpassagen 24 und 25 erstrecken, welche die mit Pfeilen A gezeigte Luftkühlungsströmung von den radial innen angeordneten Luftkühlungskanälen 5 zu den radial äußeren Luftkühlungskanälen 6 umlenkt.

In den radial inneren Luftkühlungskanälen 5 wird die Kühlluft über offene Enden 12 und 13 in Luftkühlungskanäle 5 in axialer Richtung angesaugt. In den Kanalpassagen 24 und 25 wird die axiale Kühlluftströmung in die radial äußeren Luftkühlungskanäle umgelenkt und nach Erreichen der offenen Enden 12' bzw. 13' der radial äußeren Luftkühlungskanäle 6 wird der Luftstrom radial mithilfe der Radialgebläseschaufeln 9 in Richtung auf die in Figur 1 gezeigten Wicklungsköpfe 21 und 22 der Statorwicklungen 46 und 47 umgeleitet.

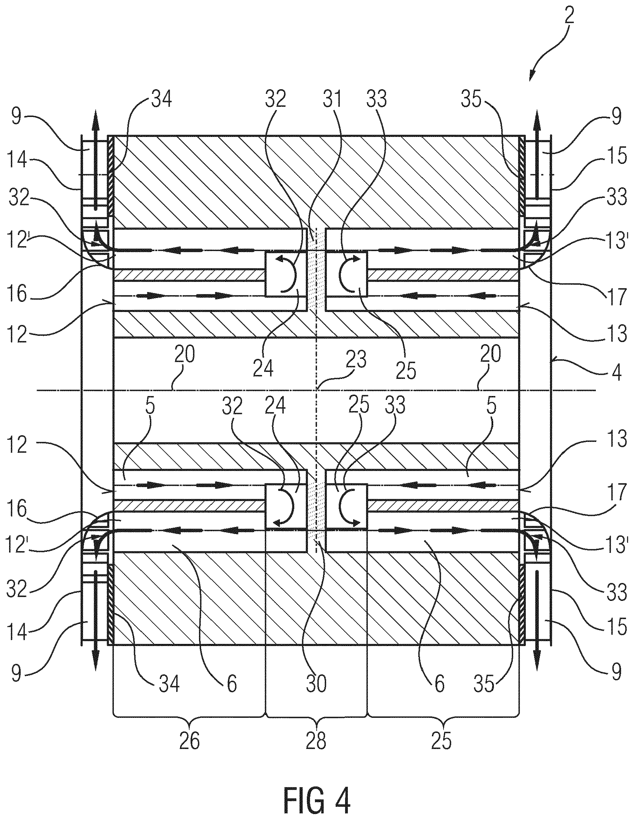

Figur 4 zeigt einen schematischen Querschnitt durch einen Rotor 2 gemäß einer Modifikation der Ausführungsform gemäß Figur 3. Der Unterschied zu der Ausführungsform gemäß Figur 3 besteht darin, dass eine Trennwand 30 aus leichtmagnetischen Blechen vorhanden ist, die keinerlei Stanzlöcher außer dem zentralen Bereich für die Rotorwelle aufweisen, so dass die beiden Zirkulationsströmungen 32 und 33 vollständig voneinander getrennt bleiben. Figur 5 zeigt mit den Figuren 5A, 5B und 5C schematische Querschnitte unterschiedlicher Blechpakete. Dazu zeigt Figur 5A einen schematischen Querschnitt durch den Rotor einer ersten Schnittebene E, die durch ein vorderes Blechpaket 26 verläuft, das völlig identisch aufgebaut ist wie das hintere Blechpaket 27, so dass in Figur 5B das Stanzmuster für einen derartigen Querschnitt zu sehen ist. Auf einem äußeren Kranz sind in der weichmagnetischen Blechscheibe 36 Hohlräume für Leiterbahnen 53 vorgesehen, die mit Leiterbahnmaterial beispielsweise einer Aluminiumlegierung ausgegossen werden können, um einen Käfigläufer zu realisieren. Außerdem ist ein radial innerer Teilkranz 18 mit Stanzlöchern 29 zu sehen, die für die radial inneren Luftkühlungskanäle 5 vorgesehen sind. Auf einem radial äußeren Teilkreis 19 sind weitere Stanzlöcher 29 für radial äußere Luftkühlungskanäle 6 angeordnet. Von diesem Querschnitt unterscheidet sich der Querschnitt des Rotors 2 der Schnittebene D-D, der in der Figur 5C gezeigt wird. Die in Figur 5A zu sehenden Kanalpassagen 24 und 25 sind als gestanzte Langlöcher 31 ausgebildet.

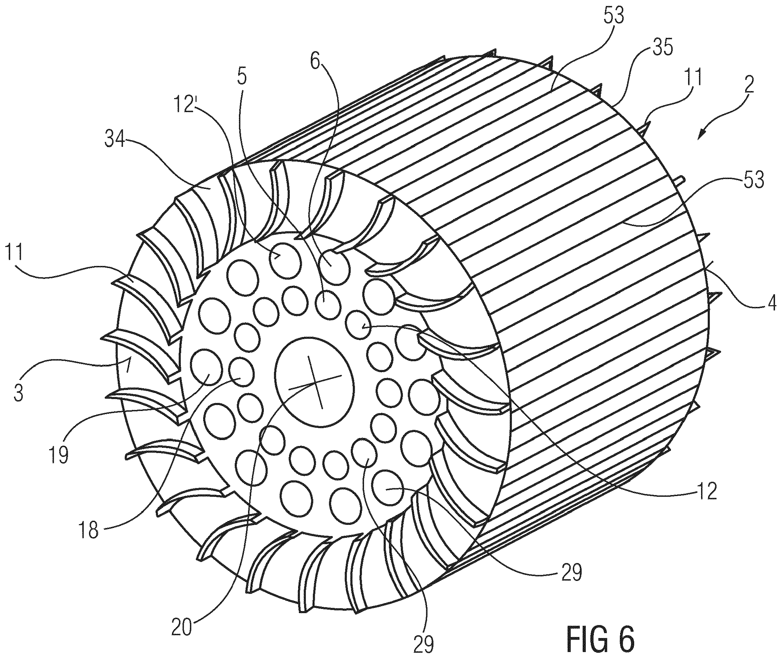

Figur 6 zeigt eine schematische perspektivische Ansicht eines Rotors 2 mit radial endenden Radialgebläseschaufeln 11 auf den Stirnseiten 3 und 4 des Rotors 2. Diese Radialgebläseschaufeln sind aus den Kurzschlussringen 34 und 35 gefertigt, so dass kein zusätzlicher Bauraum zur Ausbildung dieses Rotors 2 erforderlich ist. Außerdem weist der Rotor noch keine Luftleitscheiben auf, so dass beide Teilkreise 18 und 19 für die radial inneren Luftleitkanäle 5 und die radial äußeren Luftleitkanäle 6 als offene Enden 12' auf der vorderen Stirnseite 3 zu sehen sind. An der hinteren Stirnseite 4 sind lediglich die radial endenden Bereiche der Radialgebläseschaufeln 11 zu sehen. Der verbliebene Kurzschlussring 34 auf der vorderen Stirnseite 3 und der hintere Kurzschlussring 35 auf der hinteren Stirnseite 4 sind über Leiterbahnen 53 verbunden, deren Querschnitte in Figur 5 gezeigt wurden, und bilden gemeinsam mit den Kurzschlussringen 34 und 35 einen so genannten Käfigläufer auf dem Rotor 2 aus.

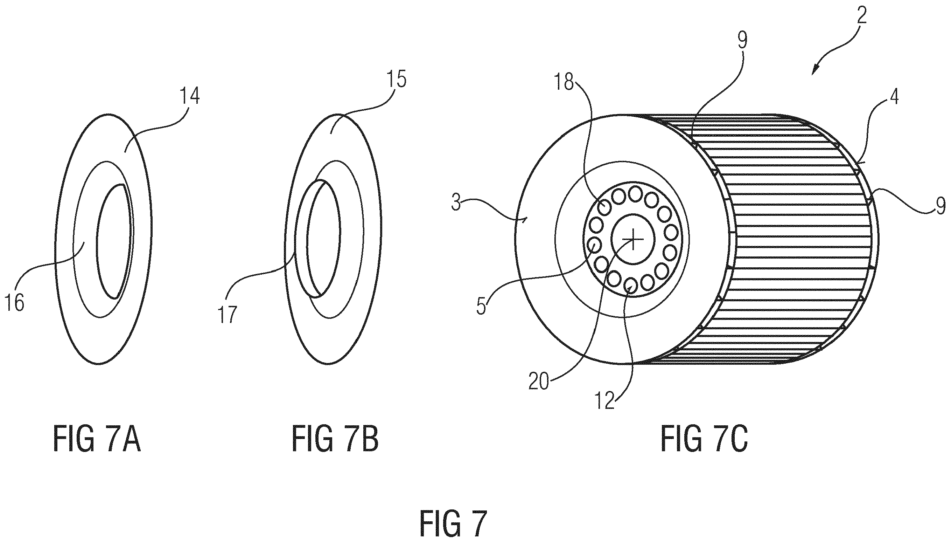

Figur 7 zeigt mit den Figuren 7A, 7B und 7C perspektivische Ansichten von Komponenten für den Zusammenbau eines Rotors 2 für eine innere Luftzirkulation zur Kühlung der elektrischen Maschine gemäß Figur 1. Von den in Figur 6 auf den Stirnseiten gezeigten Radialgebläseschaufeln werden in Figur 7A nur die Austrittsspitzen gezeigt, da die Radialgebläseschaufeln durch eine Luftleitscheibe 14, die Figur 7A zeigt, auf der vorderen Stirnseite 3 abgedeckt sind. Die Leitscheibe 14 bildet gleichzeitig einen Absaugdeckel 16 für die offenen Enden 12', 13' der radial äußeren Luftleitkanäle 6 aus.

Figur 7B zeigt entsprechend die für die hintere Stirnseite vorgesehene Luftleitscheibe 15 mit dem für die hintere Stirnseite vorgesehenen Absaugdeckel 17 der offenen Enden 12', 13' der radial äußeren Luftkühlungskanäle 6, so dass beim Zusammenbau des in Figur 6 gezeigten Rotors mit den beiden Luftleitscheiben 14 und 15 der in Figur 7C gezeigte komplette Rotor 2 für eine wirkungsvolle Luftzirkulation innerhalb der elektrischen Maschine, wie sie in Figur 1 gezeigt wird, fertig gestellt ist und praktisch nur noch auf einer Rotorwelle zu fixieren und mit den entsprechenden elektrischen Schleifringen zu verbinden ist.

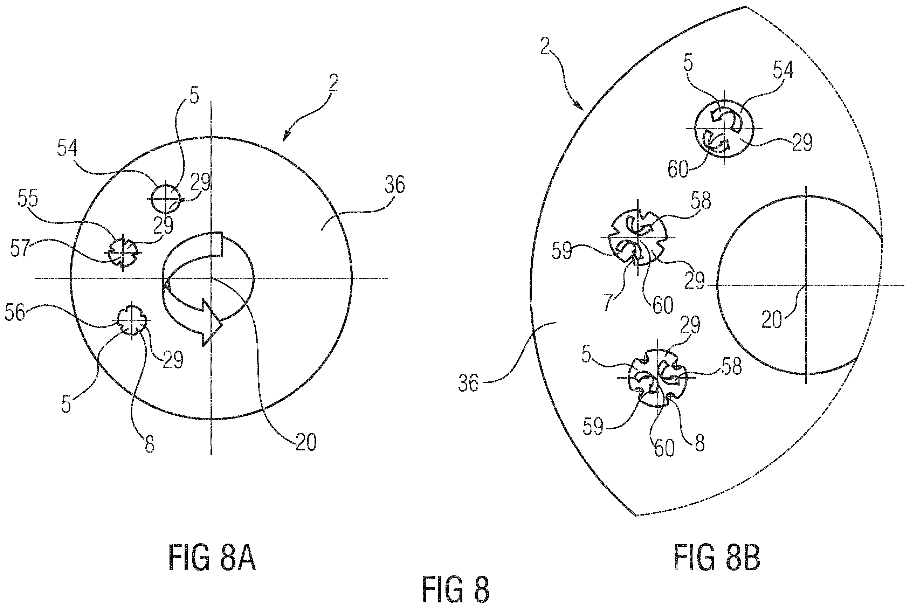

Figur 8 zeigt schematische Ansichten von Ausführungsformen von Verwirbelungsstegen 7 bzw. 8 in den Luftkühlungskanälen 54, 55 und 56 gemäß eines weiteren Aspektes der Erfindung. Für einen ersten Luftkühlungskanal 54 wird ein kreisrundes Stanzloch 29 geschaffen, so dass sich in einem entsprechend axial ausgerichteten Blechpaket eine laminare Luftströmung ausbilden kann, die üblicherweise eine parabolische Verteilung der Luftströmungsgeschwindigkeiten aufweist, das heißt, in der Mitte bildet sich die höchste Luftströmungsgeschwindigkeit aus, die bis zu der Innenwand auf Null abfällt. Dabei ist für den Wärmeübergang entscheidend wie hoch die maximale Strömungsgeschwindigkeit in der Mitte des Strömungskanals ist und welche Dicke eine schlecht wärmeleitende Prandtl-Grenzschicht zu den Innenwänden des Strömungskanals hin aufweist.

Die Luftkühlung kann deutlich intensiviert werden, wenn wie in Figur 8A ein Luftkühlungskanal 55 mit einem Profil ausgestanzt wird, bei dem das Stanzloch 29 Verwirbelungsspitzen 57 aufweist, deren Spitzenhöhe größer ist als die Dicke der Prandtl-Grenzschicht, so dass diese durch Verwirbelungen bzw. Turbulenzen in der Luftströmung aufgerissen wird und damit der Wärmeübergang von dem weichmagnetischen Blech zu der Luftströmung verbessert wird. Eine weitere Variante zeigt das Profil des Luftkühlungskanals 56, bei dem die Verwirbelungsstege 8 verrundete Spitzen aufweisen, die ebenfalls Turbulenzen in dem Kühlluftstrom hervorrufen.

In der Figur 8B wird dazu gezeigt, wie bei Rotation des Rotors sich in den einzelnen Luftkühlungskanälen 54, 55 und 56 aufgrund von Coriolis-Beschleunigungen zusätzlich zu der axial ausgerichteten Strömung Querströme ausbilden. Bei dem Luftkühlungskanal 54 wird die axiale Luftströmung von einer gleichmäßigen, gegenüber einer Kanalmitte 60 geringfügig verschobenen Kreisströmung überlagert, was in einem Querschnittsbereich die Dicke der Prandtl-Grenzschicht erhöht und in dem gegenüberliegenden Querschnittsbereich ein wenig vermindert. Eine deutlich bessere und größere Wirkung wird jedoch mit den Verwirbelungsstegen 7 bzw. 8 in den Kühlluftkanälen 55 bzw. 56 durch die mit den Pfeilen 58 und 59 gezeigten Turbulenzen erreicht. Während sich die Kosten für den Stanzvorgang für nicht profilierte und profilierte Stanzlöcher in der Praxis nicht unterscheiden, ist es von erheblichen Vorteil, nicht nur die Zirkulationsströme, wie es die vorhergehenden Figuren zeigen, zu vereinfachen und zu intensivieren, sondern auch zusätzlich den Wärmeaustausch durch die zusätzlichen Verwirbelungsstege in den Luftkühlungskanälen des Rotors 2 zu verbessern. Der Schutzbereich ist durch die Ansprüche bestimmt.

### Bezugszeichenliste

- 1: elektrische Maschine
- 2: Rotor
- 3: vordere Stirnseite
- 4: hintere Stirnseite
- 5: Luftkühlungskanal (innerer Teilkreis)
- 6: Luftkühlungskanal (äußerer Teilkreis)
- 7: Verwirbelungssteg (spitzförmig)
- 8: Verwirbelungssteg (eckig)
- 9: Radialgebläseschaufeln (rückwärts gekrümmt)
- 10: Radialgebläseschaufeln (rückwärts geneigt)
- 11: Radialgebläseschaufeln (radial endend)
- 12: radial offenes Ende des ersten Luftkühlungskanals (vordere Stirnseite)
- 12': radial offenes Ende des zweiten Luftkühlungskanals (vordere Stirnseite)
- 13: radial offenes Ende des ersten Luftkühlungskanals (hintere Stirnseite)
- 13': radial offenes Ende des zweiten Luftkühlungskanals (hintere Stirnseite)
- 14: Luftleitscheibe (vordere Stirnseite)
- 15: Luftleitscheibe (hintere Stirnseite)
- 16: Absaugdeckel (vordere Stirnseite)
- 17: Absaugdeckel (hintere Stirnseite)
- 18: Teilkreis (innerer)
- 19: Teilkreis (äußerer)
- 20: Rotorachse
- 21: Wickelkopf (vordere Stirnseite)
- 22: Wickelkopf (hintere Stirnseite)
- 23: Achsmitte (Rotor)
- 24: Kanalpassage (vordere)
- 25: Kanalpassage (hintere)
- 26: Bleckpaket (vorderes)
- 27: Bleckpaket (hinteres)
- 28: Bleckpaket (mittleres)
- 29: Stanzloch
- 30: Trennwand
- 31: Langloch
- 32: Zirkulationsströmung
- 33: Zirkulationsströmung
- 34: Kurzschlussring
- 35: Kurzschlussring
- 36: weichmagnetische Blechscheibe
- 40: Gehäuse
- 41: äußeres Gehäuseteil
- 42: inneres Gehäuseteil
- 43: vorderes Rotorlager
- 44: hinteres Rotorlager
- 45: Kühlflüssigkeitskanal
- 46: Statorwicklung
- 47: Statorwicklung
- 48: vordere Front
- 49: vorderer Lagerschild
- 50: hinterer Lagerschild
- 51: Pfeilrichtung
- 52: Pfeilrichtung
- 53: Leiterbahn
- 54: Luftkühlungskanal
- 55: Luftkühlungskanal
- 56: Luftkühlungskanal
- 57: Verwirbelungsspitzen
- 58: Pfeil
- 59: Pfeil
- 60: Kanalmitte
- A: Pfeilrichtung

## Patentansprüche

1. Elektrische Maschine aufweisend:
- einen Rotor (2);
- eine vordere Rotorstirnseite (3);
- eine hintere Rotorstirnseite (4);
- eine Rotorachse (20);
- einen ersten Luftkühlungskanal (5), der sich innerhalb des Rotors (2) in axialer Richtung der Rotorachse (20) von der vorderen zu der hinteren Rotorstirnseite (3, 4) erstreckt;
wobei in dem ersten Luftkühlungskanal (5) zumindest ein Verwirbelungssteg (7, 8) als radialer Vorsprung in den Luftkühlungskanal (5) hineinragt, und wobei sich der Verwirbelungssteg (7, 8) in axialer Richtung der Rotorachse (20) erstreckt, **gekennzeichnet durch**:
- einen zweiten Luftkühlungskanal (6), der sich innerhalb des Rotors (2) in axialer Richtung der Rotorachse (20) von der vorderen zu der hinteren Rotorstirnseite (3, 4) erstreckt;
wobei der erste Luftkühlungskanal (5) auf einem radial inneren Teilkreis (18) und der zweite Luftkühlungskanal (6) auf einem radial äußeren Teilkreis (19) parallel zu der Rotorachse (20) angeordnet sind, und wobei eine Luftleitscheibe (14, 15) sich über stirnseitig offene Enden (12', 13') des zweiten Luftkühlungskanals (6) erstreckt, während die stirnseitig offenen Enden (12, 13) des ersten Luftkühlungskanals (5) zu Wickelköpfen (21, 22) einer Statorwicklung hin offen bleiben, und wobei innerhalb des Rotors (2) eine radial ausgerichtete Kanalpassage (24, 24) vorgesehen ist, welche den ersten Luftkühlungskanal (5) mit dem zweiten Luftführungskanal (6) verbindet.

2. Elektrische Maschine nach Anspruch 1, wobei die Rotorstirnseiten (3, 4) zumindest eine Radialgebläseschaufel (9, 10, 11) aufweisen, die an den stirnseitig offenen Enden (12, 12', 13, 13') des ersten (5) und des zweiten Luftkühlungskanals (6) einen Unterdruck bei Rotationen des Rotors (2) erzeugt.

3. Elektrische Maschine nach Anspruch 2, wobei die Radialgebläseschaufel (9, 10, 11) als rückwärtsgekrümmte oder rückwärtsgeneigte oder als radial endende Radialgebläseschaufel (9, 10, 11) ausgebildet ist.

4. Elektrische Maschine nach Anspruch 2 oder Anspruch 3, wobei die Luftleitscheiben (14, 15) auf beiden Rotorstirnseiten (3, 4) die Radialgebläseschaufel (9, 10, 11) abdecken und mit stirnseitig offene Enden (12', 13') des zweiten Luftkühlungskanals (6) des radial äußeren Teilkreises (19) zusammenwirken und einen ringförmigen Absaugdeckel (16, 17) der stirnseitig offenen Enden (12', 13') des zweiten Luftkühlungskanals (6) des radial äußeren Teilkreises (19) bilden.

5. Elektrische Maschine nach einem der Ansprüche 1 bis 4, wobei der erste (5) und der zweite Luftkühlungskanal (6) des radial inneren (18) und des radial äußeren Teilkreises (19) in der Achsmitte (23) des Rotors (2) über radiale Kanalpassagen (24, 25) untereinander in Strömungsverbindung stehen.

6. Elektrische Maschine nach einem der vorhergehenden Ansprüche, wobei der Rotor (2) Blechpakete (26, 27, 28) aus stoffschlüssig miteinander verbundenen weichmagnetischen Blechen aufweist, wobei die Bleche profilierte Stanzlöcher (29) mit Vorsprüngen für die Verwirbelungsstege (7, 8) in dem ersten (5) und dem zweiten Luftkühlungskanal (6) der Blechpakete aufweisen.

7. Elektrische Maschine nach Anspruch 5 oder Anspruch 6, wobei der Rotor (2) ein vorderes Blechpaket (26) zur vorderen Rotorstirnseite (3) hin, ein hinteres Blechpaket (27) zur hinteren Rotorstirnseite (4) hin aufweist, die jeweils Öffnungen auf dem radial inneren (18) und dem radial äußeren Teilkreis (19) für den ersten (5) und den zweiten Luftkühlungskanal (6) aufweisen, und wobei der Rotor (2) ein mittleres Blechpaket (28) zwischen dem vorderen (26) und dem hinteren Blechpaket (27) aufweist, das radial ausgerichtete Langlöcher (31) zwischen den Öffnungen der zwei radial angeordneten Teilkreise (18, 19) für die radialen Kanalpassagen (24, 25) aufweist.

8. Elektrische Maschine nach Anspruch 7, wobei der Rotor (2) in dem mittleren Blechpaket (28) eine Trennwand (30) aufweist, welche die Kanalpassagen (24, 25) in eine vordere (24) und eine hintere Kanalpassage (25) zwischen dem ersten (5) und dem zweiten Luftkühlungskanal (6) trennt.

9. Elektrische Maschine nach einem der vorhergehenden Ansprüche, wobei die in Strömungsrichtung angeordneten Verwirbelungsstege (7, 8) ihre Wirkung erst beim Rotieren des Rotors (2) innerhalb des ersten (5) und des zweiten Luftkühlungskanals (6) aufgrund einer Coriolis-Beschleunigung der strömenden und rotierenden Luftmoleküle entfalten.

## Claims

1. Electrical machine having:
- a rotor (2);
- a front rotor end side (3);
- a rear rotor end side (4);
- a rotor axis (20);
- a first air cooling channel (5) which extends within the rotor (2) in the axial direction of the rotor axis (20) from the front to the rear rotor end side (3, 4);
wherein, in the first air cooling channel (5), at least one eddying web (7, 8) in the form of a radial projection protrudes into the air cooling channel (5), and wherein the eddying web (7, 8) extends in the axial direction of the rotor axis (20),
**characterized by**:
- a second air cooling channel (6) which extends within the rotor (2) in the axial direction of the rotor axis (20) from the front to the rear rotor end side (3, 4);
wherein the first air cooling channel (5) is arranged on a radially inner pitch circle (18) and the second air cooling channel (6) is arranged on a radially outer pitch circle (19) parallel to the rotor axis (20), and wherein an air guide plate (14, 15) extends over ends (12', 13'), which are open at the end sides, of the second air cooling channel (6), while the ends (12, 13), which are open at the end sides, of the first air cooling channel (5) remain open in the direction of end windings (21, 22) of a stator winding, and wherein a radially oriented channel passage (24, 25) is provided within the rotor (2), the said channel passage connecting the first air cooling channel (5) to the second air cooling channel (6).

2. Electrical machine according to Claim 1, wherein the rotor end sides (3, 4) have at least one radial fan blade (9, 10, 11) which generates a negative pressure at the ends (12, 12', 13, 13'), which are open at the end sides, of the first air cooling channel (5) and of the second air cooling channel (6) in the event of rotation of the rotor (2).

3. Electrical machine according to Claim 2, wherein the radial fan blade (9, 10, 11) is in the form of a backward-curved or backward-inclined or in the form of a radially ending radial fan blade (9, 10, 11).

4. Electrical machine according to Claim 2 or Claim 3, wherein the air guide plates (14, 15) on the two rotor end sides (3, 4) cover the radial fan blade (9, 10, 11) and interact with ends (12', 13'), which are open at the end sides, of the second air cooling channel (6) of the radially outer pitch circle (19) and form an annular intake cover (16, 17) of the ends (12', 13'), which are open at the end sides, of the second air cooling channel (6) of the radially outer pitch circle (19).

5. Electrical machine according to one of Claims 1 to 4, wherein the first air cooling channel (5) and the second air cooling channel (6) of the radially inner pitch circle (18) and of the radially outer pitch circle (19) are flow-connected to one another in the axial centre (23) of the rotor (2) by means of radial channel passages (24, 25).

6. Electrical machine according to one of the preceding claims, wherein the rotor (2) has laminated cores (26, 27, 28) comprising soft-magnetic laminations which are cohesively connected to one another, wherein the laminations have profiled stamped holes (29) with projections for the eddying webs (7, 8) in the first air cooling channel (5) and the second air cooling channel (6) of the laminated cores.

7. Electrical machine according to Claim 5 or Claim 6, wherein the rotor (2) has a front laminated core (26) in the direction of the front rotor end side (3) and a rear laminated core (27) in the direction of the rear rotor end side (4), which laminated cores each have openings on the radially inner pitch circle (18) and the radially outer pitch circle (19) for the first air cooling channel (5) and the second air cooling channel (6), and wherein the rotor (2) has a central laminated core (28) between the front laminated core (26) and the rear laminated core (27), which central laminated core has radially oriented elongate holes (31) between the openings in the two radially arranged pitch circles (18, 19) for the radial channel passages (24, 25).

8. Electrical machine according to Claim 7, wherein the rotor (2) has a separating wall (30) in the central laminated core (28), which separating wall separates the channel passages (24, 25) into a front channel passage (24) and a rear channel passage (25) between the first air cooling channel (5) and the second air cooling channel (6).

9. Electrical machine according to one of the preceding claims, wherein the eddying webs (7, 8) which are arranged in the flow direction take effect only in the event of rotation of the rotor (2) within the first air cooling channel (5) and the second air cooling channel (6) on account of Coriolis acceleration of the flowing and rotating air molecules.

## Revendications

1. Machine électrique comprenant :
- un rotor (2) ;
- un côté frontal de rotor avant (3) ;
- un côté frontal de rotor arrière (4) ;
- un axe de rotor (20) ;
- un premier canal de refroidissement par air (5) qui s'étend à l'intérieur du rotor (2) dans le sens axial de l'axe de rotor (20) du côté frontal de rotor avant au côté frontal de rotor arrière (3, 4) ;
au moins une nervure de tourbillonnement (7, 8) dans le premier canal de refroidissement par air (5) faisant saillie sous la forme d'une protubérance radiale dans le canal de refroidissement par air (5), et la nervure de tourbillonnement (7, 8) s'étendant dans le sens axial de l'axe de rotor (20), **caractérisée par** :
- un deuxième canal de refroidissement par air (6) qui s'étend à l'intérieur du rotor (2) dans le sens axial de l'axe de rotor (20) du côté frontal de rotor avant au côté frontal de rotor arrière (3, 4) ;
le premier canal de refroidissement par air (5) étant disposé sur un cercle primitif radialement intérieur (18) et le deuxième canal de refroidissement par air (6) sur un cercle primitif radialement extérieur (19), parallèlement à l'axe de rotor (20), et un déflecteur d'air (14, 15) s'étendant sur les extrémités ouvertes du côté frontal (12', 13') du deuxième canal de refroidissement par air (6), alors que les extrémités ouvertes du côté frontal (12, 13) du premier canal de refroidissement par air (5) restent ouvertes en direction des têtes de bobine (21, 22) d'une bobine de stator, et un passage de canal (24, 25) orienté dans le sens radial étant présent à l'intérieur du rotor (2), lequel relie le premier canal de refroidissement par air (5) au deuxième canal de refroidissement par air (6).

2. Machine électrique selon la revendication 1, les côtés frontaux de rotor (3, 4) possédant au moins une pale de ventilateur centrifuge (9, 10, 11) qui produit une dépression lors des rotations du rotor (2) au niveau des extrémités ouvertes du côté frontal (12, 12', 13, 13') du premier (5) et du deuxième (6) canal de refroidissement par air.

3. Machine électrique selon la revendication 2, la pale de ventilateur centrifuge (9, 10, 11) étant réalisée courbée vers l'arrière ou inclinée vers l'avant ou sous la forme d'une pale de ventilateur centrifuge (9, 10, 11) se terminant dans le sens radial.

4. Machine électrique selon la revendication 2 ou 3, les déflecteurs d'air (14, 15) recouvrant les pales de ventilateur centrifuge (9, 10, 11) des deux côtés frontaux de rotor (3, 4) et coopérant avec les extrémités ouvertes du côté frontal (12', 13') du deuxième canal de refroidissement par air (6) du cercle primitif radialement extérieur (19) et formant un couvercle d'aspiration de forme annulaire (16, 17) des extrémités ouvertes du côté frontal (12', 13') du deuxième canal de refroidissement par air (6) du cercle primitif radialement extérieur (19).

5. Machine électrique selon l'une des revendications 1 à 4, le premier (5) et le deuxième canal de refroidissement par air (6) du cercle primitif radialement intérieur (18) et extérieur (19) se trouvant en liaison fluidique entre eux dans le centre de l'axe (23) du rotor (2) par le biais de passages de canal (24, 25) radiaux.

6. Machine électrique selon l'une des revendications précédentes, le rotor (2) possédant des empilages de tôles (26, 27, 28) constitués de tôles magnétiques douces assemblées entre elles par fusion de matières, les tôles possédant des trous poinçonnés profilés (29) avec des protubérances pour les nervures de tourbillonnement (7, 8) dans le premier (5) et le deuxième (6) canal de refroidissement par air des empilages de tôles.

7. Machine électrique selon la revendication 5 ou la revendication 6, le rotor (2) possédant un empilage de tôles avant (26) en direction du côté frontal de rotor avant (3), un empilage de tôles arrière (27) en direction du côté frontal de rotor arrière (4), lesquels possèdent respectivement des ouvertures sur le cercle primitif radialement intérieur (18) et extérieur (19) pour le premier (5) et le deuxième canal de refroidissement par air (6), et le rotor (2) possédant un empilage de tôles central (28) entre les empilages de tôles avant (26) et arrière (27), lequel possède des trous oblongs (31) orientés dans le sens radial entre les ouvertures des deux cercles primitifs (18, 19) disposés dans le sens radial pour les passages de canal (24, 25) radiaux.

8. Machine électrique selon la revendication 7, le rotor (2) possédant une paroi de séparation (30) dans l'empilage de tôles central (28), laquelle sépare les passages de canal (24, 25) en un passage de canal avant (24) et un passage de canal arrière (25) entre le premier (5) et le deuxième canal de refroidissement par air (6).

9. Machine électrique selon l'une des revendications précédentes, les nervures de tourbillonnement (7, 8) disposées dans le sens de l'écoulement ne déployant leur effet que lors de la rotation du rotor (2) à l'intérieur du premier (5) et du deuxième canal de refroidissement par air (6) du fait d'une accélération de Coriolis des molécules d'air en circulation et en rotation.
